# DEMANDE DE BREVET EUROPEEN

(11) **EP 3 686 099 A1**
(43) Date de publication de la demande: **29.07.2020**
(21) Numéro de dépôt: 19214651.2
(22) Date de dépôt: 10.12.2019
(51) Int. Cl.: B62K 5/01, B62K 5/027, B62K 5/05, B62K 5/06, B62K 5/10, B62J 25/00, B60L 50/60, B62D 61/06, B60K 1/04, B62J 25/04, B62J 43/16, B62D 31/00

(54) **VÉHICULE TERRESTRE ÉTROIT, À MODULES DE STOCKAGE D'ÉNERGIE ÉLECTRIQUE SUPERPOSÉS**

(30) Priorité: 24.01.2019 FR 1900610
(71) Demandeur: PSA Automobiles SA, 78300 Poissy (FR)
(72) Inventeur: GALIDIE, STEPHAN, 93330 NEUILLY SUR MARNE (FR); POITEVIN, BERTRAND, 92130 ISSY LES MOULINEAUX (FR)

(57) **Abrégé**

Un véhicule terrestre étroit (V) comprend une structure à laquelle sont solidarisés un siège avant (S1) accueillant un passager avant, un siège arrière (S2) accueillant un passager arrière, et une machine motrice (ME) électrique et couplée à une batterie (BR) comportant au moins deux modules (M1-M3) de stockage d'énergie électrique. Tous les modules (M1-M3) sont installés sous le siège avant (S1) derrière un espace avant (EV), vide et destiné à loger les parties inférieures des jambes du passager avant, et à au moins un niveau de base et au moins un niveau supérieur superposés, le niveau de base étant le plus bas et chaque module (M2, M3) d'un niveau supérieur étant placé entre deux espaces latéraux (EL) situés de part et d'autre du siège avant (S1) et destinés à loger respectivement des sous-parties de parties inférieures des jambes du passager arrière.

## Description

### Domaine technique de l'invention

L'invention concerne les véhicules terrestres étroits, et plus précisément ceux qui comprennent au moins un siège avant, au moins un siège arrière, et au moins une machine motrice électrique et couplée à une batterie rechargeable.

### Etat de la technique

Dans ce qui suit, on entend par « véhicule terrestre étroit » un véhicule pouvant circuler sur le sol grâce à au moins trois roues réparties sur des trains avant et arrière dont la largeur est inférieure à 1 m.

Certains véhicules terrestres étroits, éventuellement inclinables dans les virages et éventuellement de type automobile, comprennent une structure à laquelle sont solidarisés au moins un siège avant destiné à accueillir au moins un passager avant, au moins un siège arrière destiné à accueillir au moins un passager arrière, et une machine motrice électrique et couplée à une batterie rechargeable comportant au moins deux modules de stockage d'énergie électrique.

Actuellement, la structure est masquée notamment par un plancher sur lequel peuvent reposer les pieds des passagers avant et arrière et sous lequel sont installés les modules (de la batterie) les uns à la suite des autres sur une ou deux lignes parallèles à la direction longitudinale du véhicule.

En raison de cet agencement, on est contraint d'installer les sièges avant et arrière à une hauteur relativement importante par rapport au sol afin que la position du passager avant demeure confortable. Cela induit un encombrement vertical du véhicule relativement important, en particulier lorsque ce dernier comprend une carrosserie délimitant un habitacle. Le véhicule peut donc plus difficilement circuler ou être garé dans des espaces de faible hauteur. En outre, cet agencement peut provoquer un alourdissement de l'ensemble de la partie inférieure avant du véhicule qui peut pénaliser sa maniabilité.

L'invention a donc notamment pour but d'améliorer la situation.

### Présentation de l'invention

Elle propose notamment à cet effet un véhicule terrestre étroit comprenant une structure à laquelle sont solidarisés au moins un siège avant destiné à accueillir au moins un passager avant, au moins un siège arrière destiné à accueillir au moins un passager arrière, et une machine motrice électrique et couplée à une batterie comportant au moins deux modules de stockage d'énergie électrique.

Ce véhicule se caractérise par le fait que tous les modules sont installés sous le siège avant derrière un espace avant, vide et destiné à loger des parties inférieures des jambes du (de chaque) passager avant, et à au moins un niveau de base et au moins un niveau supérieur superposés, ce niveau de base étant le plus bas et chaque module d'un niveau supérieur étant placé entre deux espaces latéraux situés de part et d'autre du siège avant et destinés à loger respectivement des sous-parties de parties inférieures des jambes du passager arrière.

Cette superposition de modules sous le siège avant permet de ne plus avoir de module installé sous le plancher sur lequel reposent les pieds du passager avant, et donc de réduire les hauteurs auxquelles sont respectivement installés les sièges avant et arrière par rapport au sol et dans le même temps l'encombrement vertical du véhicule.

Le véhicule selon l'invention peut comporter d'autres caractéristiques qui peuvent être prises séparément ou en combinaison, et notamment :
- il peut comprendre deux niveaux supérieurs superposés ;
- le niveau de base peut comporter au moins deux modules, installés l'un à côté de l'autre parallèlement à une direction longitudinale du véhicule ;
   > chaque niveau supérieur peut comporter un unique module installé suivant la direction longitudinale du véhicule dans une position centrée suivant une direction transversale du véhicule, perpendiculaire à cette direction longitudinale, afin de permettre la définition des espaces latéraux de part et d'autre de lui ;
- sa structure peut comprendre, d'une part, une partie avant masquée par un plancher s'étendant jusqu'au siège avant et sur lequel peuvent reposer les pieds du (de chaque) passager avant, et, d'autre part, une partie arrière prolongeant vers l'arrière cette partie avant, à laquelle est solidarisé fixement le siège arrière, et comportant un passage masqué par une trappe et permettant l'accès à un espace interne situé sous le siège avant et dans lequel est installée fixement la batterie ;
- il peut comprendre deux roues avant et une roue arrière, ou bien deux roues avant et deux roues arrière ;
- il peut être inclinable dans les virages ;
- son siège avant peut être destiné à accueillir un unique passager avant ;
- son siège arrière peut être destiné à accueillir un unique passager arrière.

### Brève description des figures

D'autres caractéristiques et avantages de l'invention apparaîtront à l'examen de la description détaillée ci-après, et des dessins annexés, sur lesquels :
[Fig. 1] illustre schématiquement, dans une vue en perspective, un exemple de réalisation d'un véhicule terrestre étroit selon l'invention, et
[Fig. 2] illustre schématiquement, dans une vue de face du côté arrière, le véhicule terrestre étroit de la figure 1.

### Description détaillée de l'invention

L'invention a notamment pour but de proposer un véhicule terrestre étroit V comprenant une structure à laquelle sont solidarisés au moins un siège avant S1, au moins un siège arrière S2, et une machine motrice ME électrique et couplée à une batterie BR.

Il est rappelé que l'on entend ici par « véhicule terrestre étroit » un véhicule pouvant circuler sur le sol grâce à au moins trois roues réparties sur des trains avant et arrière dont la largeur est inférieure à 1 m.

On considère dans ce qui suit, à titre d'exemple non limitatif, que le véhicule terrestre étroit V est une mini-voiture à trois ou quatre roues. Mais l'invention n'est pas limitée à ce type de véhicule terrestre étroit. Elle concerne en effet tout type de véhicule terrestre étroit disposant d'au moins une machine motrice électrique lui permettant de se déplacer, et comprenant soit un train comportant une roue droite et une roue gauche, et un autre train comportant une unique roue, soit deux trains comportant chacun une roue droite et une roue gauche. Par conséquent, il pourra aussi s'agir d'une motocyclette à trois roues constituant un tricycle (comme par exemple un scooter à trois roues ou un « trike »), ou d'une motocyclette à quatre roues constituant un quadricycle, ou encore de tout autre véhicule à quatre roues et train arrière étroit.

Par ailleurs, on considère dans ce qui suit, à titre d'exemple non limitatif, que le véhicule terrestre étroit V est inclinable dans les virages. Mais cela n'est pas obligatoire.

De plus, on considère dans ce qui suit, à titre d'exemple non limitatif, que le véhicule terrestre étroit V comporte un groupe motopropulseur (ou GMP) ne comprenant qu'une machine motrice ME électrique lui permettant de se déplacer. Mais un véhicule terrestre étroit V, selon l'invention, peut comprendre au moins une machine motrice électrique et au moins un moteur thermique utilisés séparément ou simultanément pour assurer ses déplacements. Dans cette dernière variante, le GMP du véhicule V est donc hybride.

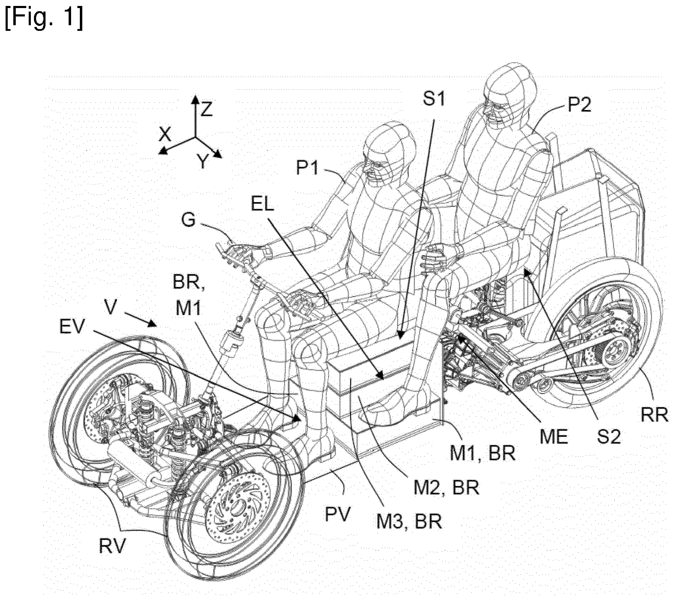

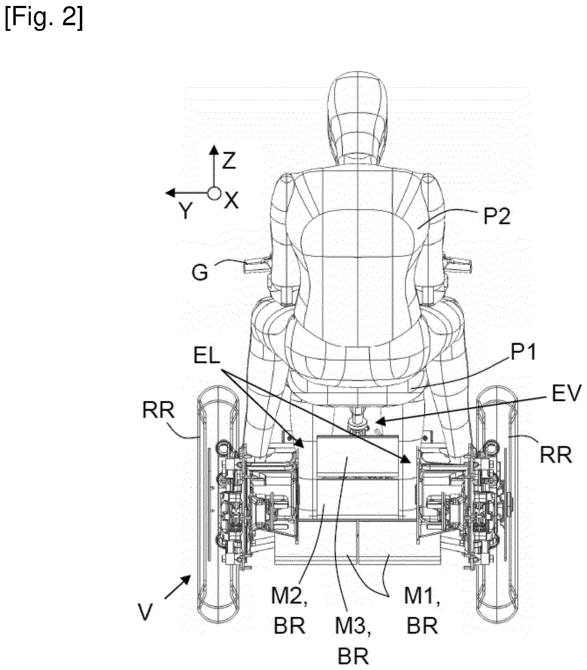

Sur les figures 1 et 2, la direction X est une direction dite longitudinale du véhicule, laquelle est parallèle aux côtés latéraux de ce dernier, la direction Y est une direction dite transversale du véhicule, laquelle est perpendiculaire à la direction X, et la direction Z est une direction dite verticale, laquelle est perpendiculaire aux directions longitudinale X et transversale Y.

On a schématiquement représenté sur les figures 1 et 2 un exemple de véhicule (terrestre étroit) V selon l'invention.

Comme illustré, un véhicule (terrestre étroit) V, selon l'invention, comprend une structure (non visible) à laquelle sont solidarisés au moins un siège avant S1, au moins un siège arrière S2, une machine motrice ME électrique et couplée à une batterie BR rechargeable, et au moins trois roues RV et RR.

On notera que lorsque le véhicule V est une mini-voiture il comprend aussi une carrosserie solidarisée à sa structure et délimitant un habitacle protégeant ses passagers P1 et P2. Cette carrosserie n'est pas matérialisée sur les figures 1 et 2 afin de ne pas les complexifier.

Les roues RV et RR sont réparties sur des trains avant et arrière. Dans l'exemple illustré non limitativement sur la figure 1, le train avant comprend deux roues avant RV et le train arrière comprend deux roues arrière RR. Mais le train avant pourrait comprendre deux roues avant RV et le train arrière pourrait comprendre une seule roue arrière RR, ou bien le train avant pourrait comprendre une seule roue avant RV et le train arrière pourrait comprendre deux roues arrière RR.

Les roues avant RV sont ici orientables au moyen d'un guidon G. Mais dans une variante elles pourraient être orientables au moyen d'un volant. Par ailleurs, les roues avant RV et les roues arrière RR sont couplées à des dispositifs de suspension qui pour l'un au moins d'entre eux peut, par exemple, être de type hydropneumatique.

Dans l'exemple illustré non limitativement sur les figures 1 et 2 le véhicule V comprend un unique siège avant S1 destiné à accueillir un unique passager avant P1, et un unique siège arrière S2 destiné à accueillir un unique passager arrière P2. On notera que sur les figures 1 et 2 seuls les emplacements des sièges avant S1 et arrière S2 sont indiqués, ces derniers (S1 et S2) ne sont en effet pas matérialisés afin de ne pas complexifier les figures.

Mais le véhicule V pourrait comprendre un unique siège avant destiné à accueillir deux passagers avant et un unique siège arrière destiné à accueillir un ou deux passagers arrière, ou un unique siège avant destiné à accueillir un unique passager avant et un unique siège arrière destiné à accueillir deux passagers arrière, ou deux sièges avant destinés à accueillir respectivement deux passagers avant et un unique siège arrière destiné à accueillir un ou deux passagers arrière, ou deux sièges avant destinés à accueillir respectivement deux passagers avant et deux sièges arrière destinés à accueillir respectivement deux passagers arrière, par exemple.

La batterie BR comprend au moins deux modules Mk de stockage d'énergie électrique, rechargeables. Chaque module Mk peut, par exemple, comprendre au moins une cellule électrochimique de stockage d'énergie électrique, par exemple de type lithium-ion (ou Li-ion) ou Ni-Mh ou Ni-Cd.

Comme illustré sur les figures 1 et 2, tous ces modules Mk sont installés sous le siège avant S1 derrière un espace avant EV qui est vide et destiné à loger des parties inférieures des jambes du passager avant P1. De plus, ces modules Mk sont installés à au moins un niveau de base (correspondant à k = 1) et au moins un niveau supérieur (correspondant à k > 1) superposés, le niveau de base étant le plus bas. En outre, chaque module Mk (k > 1) d'un niveau supérieur est placé entre deux espaces latéraux EL qui sont situés de part et d'autre du siège avant S1 et destinés à loger respectivement des sous-parties de parties inférieures des jambes du passager arrière. Ces sous-parties comprennent chacune au moins le pied et une partie des tibia et péroné.

Grâce à cette superposition (ou cet empilement) de modules Mk sous le siège avant S1, il n'y a plus de module Mk installé sous le plancher PV sur lequel reposent les pieds du passager avant P1, ce qui permet de réduire les hauteurs auxquelles sont respectivement installés les sièges avant S1 et arrière S2 par rapport au sol. Il en résulte donc une réduction de l'encombrement vertical du véhicule V, y compris lorsqu'il comprend une carrosserie délimitant un habitacle. Le véhicule peut donc plus facilement circuler ou être garé dans des espaces de faible hauteur. En outre, ce regroupement des modules Mk par superposition dans une partie centrale du véhicule V permet d'améliorer sa maniabilité, y compris lorsqu'il est inclinable dans les virages.

Par exemple, et comme illustré non limitativement sur les figures 1 et 2, le véhicule V peut comprendre deux niveaux supérieurs (k = 2 et k = 3) superposés. Dans ce cas, on a un niveau de base (k = 1) au-dessus duquel se trouve un premier niveau supérieur (k = 2) au-dessus duquel se trouve un second niveau supérieur (k = 3). Mais on pourrait avoir un unique niveau supérieur, ou bien plus de deux niveaux supérieurs (par exemple trois ou quatre). Le nombre de niveaux supérieurs dépend principalement du nombre de modules Mk que comprend la batterie BR et des dimensions de chaque module Mk.

Egalement par exemple, et comme illustré non limitativement sur les figures 1 et 2, le (un) niveau de base (k = 1) peut comporter au moins deux modules M1, installés l'un à côté de l'autre parallèlement à la direction longitudinale X du véhicule V (et donc dans un même plan). Dans l'exemple illustré non limitativement sur les figures 1 et 2, il n'y a qu'un seul niveau de base (k = 1) comportant deux modules M1. Mais il pourrait y avoir deux niveaux de base superposés et comportant chacun au moins un module M1.

Lorsque le (un) niveau de base (k = 1) comporte au moins deux modules M1, chaque niveau supérieur (k > 1) peut, comme illustré non limitativement sur les figures 1 et 2, comprendre un unique module M2 ou M3. Ce dernier (M2 ou M3) est installé suivant la direction longitudinale X du véhicule V dans une position centrée suivant la direction transversale Y de ce dernier (V), qui est perpendiculaire à la direction longitudinale X, afin de permettre la définition des espaces latéraux EL de part et d'autre de lui. L'empilement de modules Mk présente alors une forme générale en T inversé. On comprendra en effet que les niveaux supérieurs étant (ici) deux fois moins large que le niveau de base et centrés au milieu de ce dernier, on dispose de deux espaces latéraux EL à droite et à gauche des niveaux supérieurs et dans lesquels on peut placer les sous-parties des parties inférieures des jambes du passager arrière P2. Les pieds de ce dernier (P2) reposent alors sur des plaques définissant des « repose-pieds » et situées au-dessus des modules M1 du niveau de base.

On notera que la structure du véhicule V peut comprendre des parties avant et arrière. La partie avant est masquée par un plancher PV qui s'étend jusqu'au siège avant S1 et sur lequel peuvent reposer les pieds du passager avant P1. Le siège arrière S2 est solidarisé fixement à la partie arrière qui prolonge vers l'arrière la partie avant et comporte un passage masqué par une trappe (non illustrée) et permettant l'accès à un espace interne situé sous le siège avant S1 et dans lequel est installée fixement la batterie BR. Grâce à cette trappe il est possible d'accéder à l'espace interne afin de remplacer un ou plusieurs modules Mk. Contrairement à ce qui existe dans l'art antérieur, du fait de la localisation de tous les modules Mk sous le siège avant S1, on n'a plus besoin de prévoir une très grande trappe ou plusieurs petites trappes pour accéder à tous les modules Mk. Une seule trappe de petites ou moyennes dimensions suffit désormais.

## Revendications

1. Véhicule terrestre étroit (V) comprenant une structure à laquelle sont solidarisés au moins un siège avant (S1) destiné à accueillir au moins un passager avant, au moins un siège arrière (S2) destiné à accueillir au moins un passager arrière, et une machine motrice (ME) électrique et couplée à une batterie (BR) comportant au moins deux modules (Mk) de stockage d'énergie électrique, **caractérisé en ce que** tous lesdits modules (Mk) sont installés sous ledit siège avant (S1) derrière un espace avant (EV), vide et destiné à loger des parties inférieures des jambes dudit passager avant, et à au moins un niveau de base et au moins un niveau supérieur superposés, ledit niveau de base étant le plus bas et chaque module (Mk) d'un niveau supérieur étant placé entre deux espaces latéraux (EL) situés de part et d'autre dudit siège avant (S1) et destinés à loger respectivement des sous-parties de parties inférieures des jambes dudit passager arrière.

2. Véhicule selon la revendication 1, **caractérisé en ce qu'**il comprend deux niveaux supérieurs superposés.

3. Véhicule selon la revendication 1 ou 2, **caractérisé en ce que** ledit niveau de base comporte au moins deux modules (Mk), installés l'un à côté de l'autre parallèlement à une direction longitudinale dudit véhicule (V).

4. Véhicule selon la revendication 3, **caractérisé en ce que** chaque niveau supérieur comporte un unique module (Mk) installé suivant ladite direction longitudinale du véhicule (V) dans une position centrée suivant une direction transversale dudit véhicule (V), perpendiculaire à ladite direction longitudinale, afin de permettre la définition desdits espaces latéraux (EL) de part et d'autre de lui.

5. Véhicule selon l'une des revendications 1 à 4, **caractérisé en ce que** ladite structure comprend i) une partie avant masquée par un plancher (PV) s'étendant jusqu'audit siège avant (S1) et sur lequel peuvent reposer les pieds dudit passager avant, et ii) une partie arrière prolongeant vers l'arrière ladite partie avant, à laquelle est solidarisé fixement ledit siège arrière (S2), et comportant un passage masqué par une trappe et permettant l'accès à un espace interne situé sous ledit siège avant (S1) et dans lequel est installée fixement ladite batterie (BR).

6. Véhicule selon l'une des revendications 1 à 5, **caractérisé en ce qu'**il comprend deux roues avant et une roue arrière.

7. Véhicule selon l'une des revendications 1 à 5, **caractérisé en ce qu'**il comprend deux roues avant (RV) et deux roues arrière (RR).

8. Véhicule selon l'une des revendications 1 à 7, **caractérisé en ce qu'**il est inclinable dans les virages.

9. Véhicule selon l'une des revendications 1 à 8, **caractérisé en ce que** ledit siège avant (S1) est destiné à accueillir un unique passager avant.

10. Véhicule selon l'une des revendications 1 à 9, **caractérisé en ce que** ledit siège arrière (S2) est destiné à accueillir un unique passager arrière.
